# EUROPÄISCHE PATENTSCHRIFT

(11) **EP 1 819 574 B1**
(45) Veröffentlichungstag und Bekanntmachung des Hinweises auf die Patenterteilung: **02.07.2008**
(21) Anmeldenummer: 05803446.3
(22) Anmeldetag: 08.11.2005
(51) Int. Cl.: B62D 5/04

(54) **LENKUNG MIT EINEM ELEKTROMOTOR ZUR LENKKRAFTUNTERSTUETZUNG**
STEERING SYSTEM COMPRISING AN ELECTRIC MOTOR FOR BOOSTING THE STEERING EFFORT
DIRECTION COMPORTANT UN MOTEUR ELECTRIQUE DESTINE A L'ASSISTANCE DE DIRECTION

(30) Priorität: 10.12.2004 DE 102004059461
(43) Veröffentlichungstag der Anmeldung: 22.08.2007
(73) Patentinhaber: ZF Lenksysteme GmbH, 73527 Schwäbisch Gmünd (DE)
(72) Erfinder: BUDAKER, Martin, 73540 Heubach (DE); REUTER, Wolfgang, 61197 Florstadt (DE)
(86) Internationale Anmeldenummer: PCT/EP2005/055812
(87) Internationale Veröffentlichungsnummer: WO 2006/061298

(56) Entgegenhaltungen:
- EP-A- 1 431 161
- DE-A1- 3 539 107
- DE-A1- 4 105 780
- DE-A1- 10 260 261
- JP-A- 2004 196 034

## Beschreibung

Die Erfindung betrifft eine Lenkung, insbesondere für ein Kraftfahrzeug, mit einem Elektromotor zur Lenkkraftunterstützung und einer Lenksäule.

Wie allgemein aus dem Stand der Technik bekannt ist, überträgt bei einer in der Lenksäule integrierten Servoeinheit ein Elektromotor eine Unterstützungskraft mittels eines Getriebes auf die Lenksäule. Durch die Getriebeuntersetzung wird das vom Elektromotor auf die Lenksäule wirkende Drehmoment vergrößert, sodass die gewünschte Unterstützungskraft auf die Zahnstange übertragen wird. Bei einer so genannten Elektrolenkung werden fast ausschließlich Schneckengetriebe verwendet, mit denen eine Untersetzung von ungefähr 1:16 bis 1:30 möglich ist. Schneckengetriebe haben jedoch den großen Nachteil, dass sie relativ teuer, über das Fahrzeugleben nicht spielfrei sind, und einen schlechten Wirkungsgrad aufweisen. Außerdem benötigen sie relativ viel Bauraum, weil der Elektromotor rechtwinklig zur Lenksäule angeordnet ist.

Eine Lenkung mit den Merkmalen des Oberbegriffs des Anspruchs 1 ist in EP 1431161 A dargestellt.

Die Erfindung hat die Aufgabe, die Lenkung der eingangs genannten Art dahingehend zu verbessern, dass der erforderliche Bauraum deutlich reduziert werden kann und das Geräuschniveau niedrig ist.

Die Erfindung löst die gestellte Aufgabe mit einer Lenkung der eingangs genannten Art mit den Merkmalen des Anspruchs 1, bei der erfindungsgemäß die Lenksäule und der Elektromotor parallel oder koaxial zueinander angeordnet sind. Zischen der Motorwelle und der Lenksäule ist mindestens eine weitere Welle parallel angeordnet, wobei die mindestens eine weitere Welle durch jeweils mindestens einen Riemen mit jeder zu ihr benachbarten Welle verbunden ist. Auf diese Weise kann ein mehrstufiges Riemengetriebe verwirklicht werden. Durch die Verwendung von mehreren Riemen kann zukünftig das relativ teure und platzraubende Schneckengetriebe entfallen. Riemengetriebe haben im Vergleich zu Schneckengetrieben einen günstigeren Wirkungsgrad. Die Verwendung von Riemen spart somit Kosten und Einbauraum. Außerdem trägt die Verwendung von Riemen auch zum Schutz der Fahrzeuginsassen bei einem Unfall bei, da das Schneckengetriebe bei einem Unfall nicht mehr in den Fahrzeuginnenraum gedrückt werden kann. Die Verwendung von Zahnriemen ermöglicht eine sichere Drehmomentenübertragung. Außerdem sind Zahnriemen über das gesamte Fahrzeugleben spiel- und geräuschfrei.

Bei der erfindungsgemäßen Lenkung mit einem mehrstufigen Riemengetriebe ist der mit dem Elektromotor verbundene Riemen ein Zahnriemen mit einem kleinen Modul und der mit der Lenksäule verbundene Riemen ein Zahnriemen mit einem großen Modul. Bei Verwendung eines Riemens mit einem kleinen Modul können geringe Drehmomente bei hohen Drehzahlen übertragen werden, wobei das Geräuschniveau niedrig ist. Wird ein Riemen mit einem großen Modul eingesetzt, so können hohe Drehmomente bei niedriger Drehzahl übertragen werden, wobei das Geräuschniveau und die Gefahr eines überspringens von Zähnen des Zahnriemens über Zähne der Riemenscheibe niedrig ist.

Damit eine Untersetzung sichergestellt werden kann, kann eine auf der Motorwelle angeordnete Riemenscheibe einen kleineren Durchmesser aufweisen als die auf der zur Motorwelle benachbarten Welle angeordnete Riemenscheibe.

Ebenfalls, um eine Untersetzung zu erreichen, kann eine auf der Lenksäule angeordnete Riemenscheibe einen größeren Durchmesser aufweisen als die auf der zur Lenksäule benachbarten Welle angeordnete Riemenscheibe.

In einer weiteren Ausführungsform können der Elektromotor und die Lenksäule mit einem Zahnriemengetriebe miteinander verbunden sein, wobei der Zahnriemen beidseitig verzahnt ist und die beiden Seiten des Zahnriemens eine unterschiedliche Zähnezahl aufweisen. Auch bei dieser Ausführungsform kann der Bauraum deutlich reduziert werden, wobei gleichzeitig extrem hohe Untersetzungen realisiert werden können.

In einer ebenfalls bevorzugten Ausführungsform kann der Elektromotor eine hohle Motorwelle aufweisen, welche die Lenksäule aufnimmt. Diese Ausführungsform benötigt besonders wenig Einbauraum.

Um eine möglichst hohe Untersetzung zu erreichen, ist erfindungsgemäß parallel zur Motorwelle und zur Lenksäule eine weitere Welle angeordnet, auf der eine große und eine kleine Riemenscheibe angeordnet ist, wobei die große Riemenscheibe mit einer kleineren Riemenscheibe auf der Motorwelle und die kleine Riemenscheibe mit einer größeren Riemenscheibe auf der Lenksäule verbunden ist.

Besonders elegant ist es, wenn ein Drehmomentsensor in einer großen auf der Lenksäule angeordneten Riemenscheibe integriert ist. Der Drehmomentsensor kann dann das zum Lenken erforderliche Drehmoment detektieren, damit der Elektromotor abhängig vom ermittelten Drehmoment die erforderliche Lenkkraftunterstützung erzeugen kann.

Zweckmäßigerweise ist die Lenksäule in einem Lenksäulengehäuse gelagert.

Nachfolgend werden verschiedene Ausführungsbeispiele der erfindungsgemäßen Lenkung anhand der beiliegenden Zeichnungen näher erläutert.

Im Einzelnen zeigen:
- Fig. 1: eine Seitenansicht auf ein erstes Ausführungsbeispiel;
- Fig. 2: eine Draufsicht auf ein Zahnriemengetriebe mit einem beidseitig verzahnten Zahnriemen eines zweiten Ausführungsbeispiels;
- Fig. 3.: eine Schnittansicht durch das Zahnriemengetriebe aus Fig. 2;
- Fig. 4: eine Seitenansicht auf ein drittes Ausführungsbeispiel.

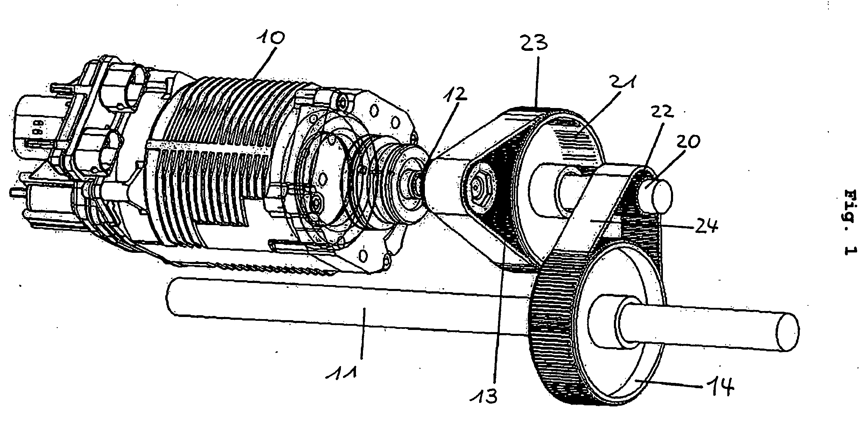

Fig. 1 zeigt den Elektromotor 10 und die Lenksäule 11, wobei parallel zur Motorwelle 12 und der Lenksäule 11 eine weitere Welle 20 angeordnet ist. Auf der weiteren Welle 20 sind eine größere Riemenscheibe 21 und eine kleine Riemenscheibe 22 montiert. Die Riemenscheibe 13 und die größere Riemenscheibe 21 sind mit einem Zahnriemen 23 und die kleinere Riemenscheibe 22 und die Riemenscheibe 14 mit einem Zahnriemen 24 verbunden. Durch die weitere Welle 20 wird ein zweistufiges Riemengetriebe verwirklicht, wobei die Durchmesser der Riemenscheiben 13, 21, 22 und 14 so gewählt sind, dass möglichst eine große Untersetzung der Drehzahl des Elektromotors 10 erreicht wird. Selbstverständlich können außer der Welle 20 auch noch weitere Wellen vorgesehen werden, um höherstufige Riemengetriebe zu bauen, und dadurch noch größere Untersetzungen der Drehzahl des Elektromotors 10 zu erreichen.

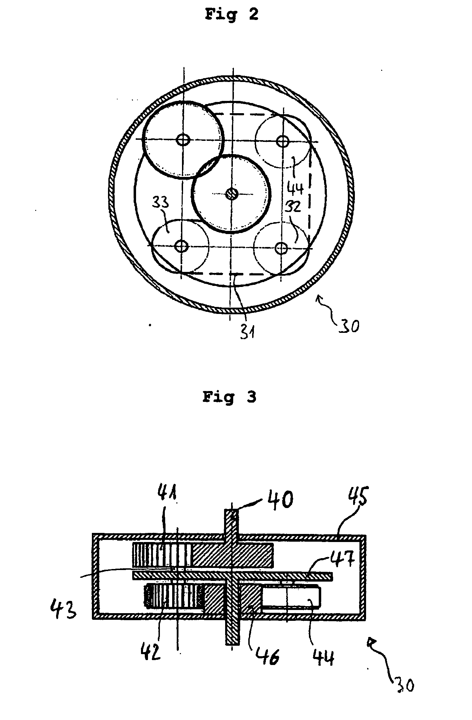

Fig. 2 zeigt ein Zahnriemengetriebe 30 mit einem auf beiden Seiten verzahnten Zahnriemen 31, der auf beiden Seiten eine unterschiedliche Zähnezahl aufweist. Mit dem Zahnriemengetriebe 30 können auf engstem Bauraum sehr hohe Untersetzungsverhältnisse erreicht werden.

Bei dieser Ausführungsform ist ein Zahnrad 40 mit dem hier nicht näher gezeigten Elektromotor verbunden. Das Drehmoment des Elektromotors wird vom Zahnrad 40 auf ein Zahnrad 41 übertragen. Das Zahnrad 41 sitzt mit einer darunter angeordneten Riemenscheiben 42 auf einer gemeinsamen Welle 43, wobei das Zahnrad 41 und die Riemenscheibe 42 fest mit der Welle 43 verbunden sind. Folglich wird das Drehmoment durch die Welle 43 von dem Zahnrad 41 auf die Riemenscheibe 42 übertragen. Der Zahnriemen 31 überträgt mit seiner Innenverzahnung das Drehmoment von der Riemenscheibe 42 auf die Riemenscheiben 44, 32 und 33 (siehe Fign. 2 und 3). Der Zahnriemen 31 umschlingt mit seiner Außenverzahnung eine mit einem Gehäuse 45 fest verbundene Riemenscheibe 46. Durch die unterschiedliche Zähnezahl der Innenverzahnung und der Außenverzahnung des Zahnriemens 31 wird eine Scheibe 47, die mit der hier ebenfalls nicht gezeigten Lenksäule verbunden ist, in eine Drehbewegung versetzt, wobei die Drehzahl der Scheibe 47 deutlich niedriger ist als die des Zahnrades 40. Folglich wird durch das Zahnriemengetriebe 30 die Drehzahl des Elektromotors reduziert.

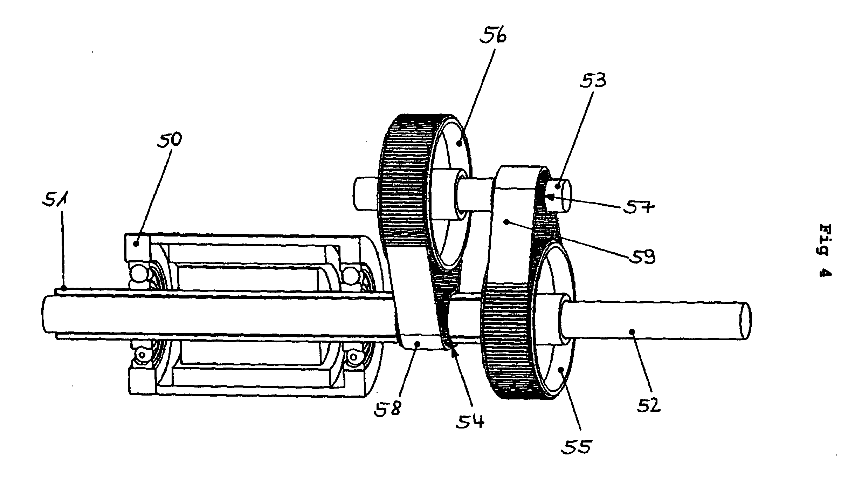

Fig. 4 zeigt einen Elektromotor 50 der eine hohle Motorwelle 51 aufweist. In der hohlen Motorwelle 51 ist eine Lenksäule 52 eingeführt, weshalb diese Ausführungsform besonders wenig Bauraum erfordert. Parallel zur Motorwelle 51 und zur Lenksäule 52 ist eine weitere Welle 53 angeordnet, auf der eine große Riemenscheibe 56 und eine kleine Riemenscheibe 57 angeordnet ist, wobei die große Riemenscheibe 56 mit einer kleineren Riemenscheibe 54 auf der Motorwelle 51 und die kleine Riemenscheibe 57 mit einer größeren Riemenscheibe 55 auf der Lenksäule 52 verbunden ist.
Durch die gewählte Anordnung der Riemenscheiben 54, 55, 56 und 57 kann ein hohes Untersetzungsverhältnis erzielt werden.
Die Riemenscheiben 55 und 57 sind auf den Wellen 52 und 53 rechts von den Riemenscheiben 56 und 58 angeordnet. Durch diese Anordnung kann ein hier nicht näher dargestellter Drehmomentsensor in der Lenksäule 52 im Bereich des Elektromotors 50 integriert werden.

## Patentansprüche

1. Lenkung, insbesondere für ein Kraftfahrzeug, mit einem Elektromotor (10, 50) zur Lenkkraftunterstützung und einer Lenksäule (11, 52), wobei die Lenksäule (11, 52) und der Elektromotor (10, 50) parallel oder koaxial zueinander angeordnet sind, **dadurch gekennzeichnet, dass** zwischen der Motorwelle (12, 51) und der Lenksäule (11, 52) mindestens eine weitere Welle (20, 53) parallel angeordnet ist, wobei die mindestens eine weitere Welle (20, 53) durch jeweils mindestens einen Riemen mit jeder zu ihr benachbarten Welle (11, 12, 53, 52) verbunden ist, und dass der mit dem Elektromotor (10, 50) verbundene, als Zahnriemen (23, 58) ausgebildete Riemen ein kleineres Modul aufweist, als der mit der Lenksäule (11, 52) verbundene, als Zahnriemen (24, 59) ausgebildete Riemen.

2. Lenkung nach Anspruch 1, **dadurch gekennzeichnet, dass** eine auf der Motorwelle (12) angeordnete Riemenscheibe (13) einen kleineren Durchmesser aufweist als die auf der zur Motorwelle (12) benachbarten Welle (20) angeordnete Riemenscheibe (23).

3. Lenkung nach einem der Ansprüche 1 oder 2, **dadurch gekennzeichnet, dass** eine auf der Lenksäule (11) angeordnete Riemenscheibe (14) einen größeren Durchmesser aufweist als die auf der zur Lenksäule (11) benachbarten Welle (20) angeordnete Riemenscheibe (22).

4. Lenkung nach Anspruch 1, **dadurch gekennzeichnet, dass** der Elektromotor und die Lenksäule mit einem Zahnriemengetriebe (30) miteinander verbunden sind, wobei der Zahnriemen (31) beidseitig verzahnt ist und die beiden Seiten des Zahnriemens (31) eine unterschiedliche Zähnezahl aufweisen.

5. Lenkung nach Anspruch 1, **dadurch gekennzeichnet, dass** der Elektromotor (50) eine hohle Motorwelle (51) aufweist, welche die Lenksäule (52) aufnimmt.

6. Lenkung nach Anspruch 5, **dadurch gekennzeichnet, dass** auf der weiteren Welle (53) eine große Riemenscheibe (56) und eine kleine Riemenscheibe (57) angeordnet ist, wobei die große Riemenscheibe (56) mit einer kleineren Riemenscheibe (54) auf der Motorwelle (51) und die kleine Riemenscheibe (57) mit einer größeren Riemenscheibe (55) auf der Lenksäule (52) verbunden ist.

7. Lenkung nach einem der Ansprüche 1 bis 6, **dadurch gekennzeichnet, dass** ein Drehmomentsensor in einer großen auf der Lenksäule (11, 52) angeordneten Riemenscheibe (14, 55) integriert ist.

8. Lenkung nach einem der Ansprüche 1 bis 7, **dadurch gekennzeichnet, dass** die Lenksäule (11, 52) in einem Lenksäulengehäuse gelagert ist.

## Claims

1. Steering system, in particular for a motor vehicle, comprising an electric motor (10, 50) for boosting the steering effort and a steering column (11, 52), the steering column (11, 52) and the electric motor (10, 50) being arranged parallel to or coaxially with one another, **characterized in that** at least one further shaft (20, 53) is arranged in parallel between the motor shaft (12, 51) and the steering column (11, 52), the at least one further shaft (20, 53) being connected by at least one belt in each case to each of the shafts (11, 12, 53, 52) adjacent thereto, and which is configured as a toothed belt (23, 58) and connected to the electric motor (10, 50) has a lower modulus than the belt which is configured as a toothed belt (24, 59) and connected to the steering column (11, 52).

2. Steering system according to Claim 1, **characterized in that** a belt pulley (13) arranged on the motor shaft (12) has a smaller diameter than the belt pulley (23) arranged on the shaft (20) adjacent to the motor shaft (12).

3. Steering system according to either of claims 1 and 2, **characterized in that** a belt pulley (14) arranged on the steering column (11) has a larger diameter than the belt pulley (22) arranged on the shaft (20) adjacent to the steering column (11).

4. Steering system according to Claim 1, **characterized in that** the electric motor and the steering column are connected to one another by a toothed belt transmission (30), the toothed belt (31) being toothed on both sides and the two sides of the toothed belt (31) having different numbers of teeth.

5. Steering system according to Claim 1, **characterized in that** the electric motor (50) has a hollow motor shaft (51) which receives the steering column (52).

6. Steering system according to Claim 5, **characterized in that** a large belt pulley (56) and a small belt pulley (57) are arranged on the further shaft (53), the large belt pulley (56) being connected to a smaller belt pulley (54) on the motor shaft (51) and the small belt pulley (57) being connected to a larger belt pulley (55) on the steering column (52).

7. Steering system according to any one of Claims 1 to 6, **characterized in that** a torque sensor is integrated in a large belt pulley (14, 55) arranged on the steering column (11, 52).

8. Steering system according to any one of Claims 1 to 7, **characterized in that** the steering column (11, 52) is mounted in a steering column housing.

## Revendications

1. Système de direction, notamment pour un véhicule automobile, comprenant un moteur électrique (10, 50) pour l'assistance à la direction, et une colonne de direction (11, 52), la colonne de direction (11, 52) et le moteur électrique (10, 50) étant disposés parallèlement ou coaxialement l'un à l'autre, **caractérisé en ce qu'**au moins un arbre supplémentaire (20, 53) est disposé parallèlement entre l'arbre du moteur (12, 51) et la colonne de direction (11, 52), l'au moins un arbre supplémentaire (20, 53) étant connecté par au moins une courroie respective à chaque arbre qui lui est adjacent (11, 12, 53, 52), et **en ce que** la courroie connectée au moteur électrique (10, 50), réalisée sous forme de courroie dentée (23, 58), présente un plus petit module que la courroie connectée à la colonne de direction (11, 52) et réalisée sous forme de courroie dentée (24, 59).

2. Système de direction selon la revendication 1, **caractérisé en ce qu'**une poulie à courroie (13) disposée sur l'arbre de moteur (12) présente un plus petit diamètre que la poulie à courroie (23) disposée sur l'arbre (20) adjacent à l'arbre du moteur (12).

3. Système de direction selon l'une quelconque des revendications 1 ou 2, **caractérisé en ce qu'**une poulie à courroie (14) disposée sur la colonne de direction (11) présente un plus grand diamètre que la poulie à courroie (22) disposée sur l'arbre (20) adjacent à la colonne de direction (11).

4. Système de direction selon la revendication 1, **caractérisé en ce que** le moteur électrique et la colonne de direction sont connectés l'un à l'autre par une transmission à courroie dentée (30), la courroie dentée (31) étant dentée des deux côtés et les deux côtés de la courroie dentée (31) présentant un nombre de dents différent.

5. Système de direction selon la revendication 1, **caractérisé en ce que** le moteur électrique (50) présente un arbre de moteur creux (51) qui reçoit la colonne de direction (52).

6. Système de direction selon la revendication 5, **caractérisé en ce qu'**une grande poulie à courroie (56) et une petite poulie à courroie (57) sont disposées sur l'arbre supplémentaire (53), la grande poulie à courroie (56) étant connectée à une plus petite poulie à courroie (54) sur l'arbre du moteur (51) et la petite poulie à courroie (57) étant connectée à une plus grande poulie à courroie (55) sur la colonne de direction (52).

7. Système de direction selon l'une quelconque des revendications 1 à 6, **caractérisé en ce qu'**un capteur de couple est intégré dans une grande poulie à courroie (14, 55) disposée sur la colonne de direction (11, 52).

8. Système de direction selon l'une quelconque des revendications 1 à 7, **caractérisé en ce que** la colonne de direction (11, 52) est montée dans un boîtier de colonne de direction.
